# EUROPÄISCHE PATENTSCHRIFT

(11) **EP 0 430 927 B1**
(45) Veröffentlichungstag und Bekanntmachung des Hinweises auf die Patenterteilung: **27.12.1996**
(21) Anmeldenummer: 91102318.2
(22) Anmeldetag: 29.02.1988
(51) Int. Cl.: A01C 17/00

(54) **Schleuderdüngerstreuer**
Broadcaster
Epandeur centrifuge

(30) Priorität: 06.03.1987 DE 3707188; 29.05.1987 DE 3718145; 05.09.1987 DE 3729871; 23.10.1987 DE 3735896
(43) Veröffentlichungstag der Anmeldung: 05.06.1991
(62) Teilanmeldung aus: 88102994.6
(73) Patentinhaber: Amazonen-Werke H. Dreyer GmbH & Co. KG, D-49205 Hasbergen (DE)
(72) Erfinder: Dreyer, Heinz, Dipl.-Ing.Dr., W-4507 Hasbergen (DE)
(74) Vertreter: Grünecker, Kinkeldey, Stockmair & Schwanhäusser Anwaltssozietät

(56) Entgegenhaltungen:
- EP-A- 0 017 128
- EP-A- 0 240 734
- FR-A- 826 901
- FR-A- 2 450 551
- FR-A- 2 496 390

## Beschreibung

Die Erfindung betrifft einen Schleuderdüngerstreuer zum Verteilen von Düngemitteln und dgl. gemäß des Oberbegriffes des Anspruches 1.

Durch die deutsche Offenlegungsschrift 29 08 949 ist ein Schleuderstreuer bekannt, der Schleuderscheiben aufweist, bei denen die Wurfschaufeln nach Skalen einstellbar sind. Zunächst ist bei diesem Schleuderstreuer von Nachteil, daß jeweils nur gleichlange Wurfschaufeln vorgesehen sind, so daß kein ausreichend genaues Streubild erzielt werden kann, dieses vor allem bei großen Arbeitsbreiten. Darüber hinaus erfolgt jeweils eine Verstellung der Abwurfwinkel in aufrechter wie in horizontaler Ebene. Diese Einstellung ist für den Landwirt verwirrend, weil er jeweils genau darauf achten muß, daß er jeweils an einer Schaufel zwei Einstellungen in der vorgeschriebenen Weise vornehmen muß. Dieses kann er sehr leicht zu Verwechselungen führen. Weiterhin ist es bei diesem Schleuderdüngerstreuer es nicht möglich, das Grenzstreuen durchzuführen. Lediglich ist mit diesem Düngerstreuer es möglich die Normal- und Spärdüngung durchzuführen.

Ein gattungsbildender Schleuderdüngerstreuer ist bereits durch die EP-PS 00 17 128 bekannt. Dieser Schleuderdüngerstreuer weist zwei unterhalb seines Vorratsbehälters quer zur Fahrtrichtung angeordnete Schleuderscheiben auf, die jeweils leicht lösbar auf den Ausgangswellen eines Winkelgetriebes angeordnet sind. Auf den Schleuderscheiben sind jeweils zwei Wurfschaufeln unterschiedlicher Länge befestigt, deren jeweilige Abstreukante einen unterschiedlichen Abstand zur Rotationsachse der Schleuderscheibe aufweisen sollent. Jede Wurfschaufel besteht aus einem inneren Teil gleicher Länge, an dem unterschiedlich lange, in lotrechter Ebene schwenkbare äußere Teile angeordnet sind, so daß der in lotrechter Ebene gemessene Abwurfwinkel für die jeweiligen äußeren Teile in unterschiedlichen Größen eingestellt werden kann. Zur Veränderung des Abstandes der Abstreukante der jeweiligen Wurfschaufel von der Rotationsachse der Schleuderscheibe weist diese zur Befestigung des jeweiligen inneren Teiles einer Wurfschaufel ein radial angeordnetes Langloch auf. Der horizontale Anstellwinkel zwischen der Wurfschaufel und der an der Stelle ihrer Abstreukante an ihrer Umlaufbahn in Drehrichtung angelegten Tangente läßt sich mittels sich in jedem inneren Teil einer Wurfschaufel befindlichen, bogenförmig ausgebildeten Langloches verändern.

Dadurch, daß sich der Abstand der Abstreukante der Wurfschaufeln von der Rotationsachse der Schleuderscheibe und der horizontale Anschlagwinkel der Schaufeln verändern läßt, ist eine für jeden Einsatzfall gleichmäßige Verteilung der Düngemittel und anderer Stoffe auf den Boden zu erreichen sowie ein optimales Streubild zu erzeugen.

Nachteilig ist jedoch, daß sich eine Veränderung des Abstandes der Abstreukante der Wurfschaufeln von der Rotationsachse der Schleuderscheibe nur dadurch herbeiführen läßt, indem das innere Teil der Wurfschaufel mit verschoben werden muß. Dieses führt bei einer Vergrößerung des Abstandes der Abstreukannte dazu, daß das innere Teil radial nach außen, in Richtung auf den Schleuderscheibenrand, verschoben wird. Hierdurch besteht die Gefahr, daß der aus der Auslauföffnung des Vorratsbehälters herausrieselnde und auf die Schleuderscheibe auftreffende Materialstrom nicht immer sicher von den einzelnen Wurfschaufeln erfaßt und nicht in ordnungsgemäßer Weise verteilt wird. Diese Gefahr besteht vor allen dann, wenn der radiale Abstand der Abstreukante, um eine große Vatiationsbreite bei der Einstellung der Abreitsbreite - von beispielsweise 12 bis 24 m und mehr - zu haben, sehr vergrößert werden muß. Als weiterer Nachteil ist das Einstellen in der Wurfschaufel in der jeweils erforderlichen Position anzusehen, da weder an den Wurfschaufeln noch an den Schleuderscheiben Einstellmarkierungen vorhanden sind.

Es ist dieser Druckschrift nicht zu entnehmen, daß diese Schleuderscheiben gegen andere Schleuderscheiben mit anderen Wurfelementen ausgetauscht werden sollen. Auf den Schleuderscheiben sind jeweils zwei Wurfschaufeln unterschiedlicher Länge befestigt, deren jeweilige Abstreukante einen unterschiedlichen Abstand zur Rotationsachse der Schleuderscheibe aufweisen soll. Jede Wurfschaufel besteht hier aus einem inneren Teil gleicher Länge, an dem unterschiedlich lange, in lotrechter Ebene verschwenkbare äußere Teile angeordnet sind, so daß der in lotrechter Ebene gemessene Abwurfwinkel für die jeweiligen äußeren Teile in unterschiedlichen Größen eingestellt werden kann. Zur Veränderung des Abstandes der Abstreukante der jeweiligen Wurfschaufel von der Rotationsachse der Schleuderscheibe weist diese zur Befestigung des jeweiligen inneren Teiles einer Wurfschaufel ein radial angeordnetes Langloch auf. Der horizontale Anstellwinkel zwischen der Wurfschaufel und der an der Stelle ihrer Abstreukante an ihrer Umlaufbahn in Drehrichtung angelegten Tangente läßt sich mittels sich in jedem inneren Teil einer Wurfschaufel befindlichen, bogenförmig ausgebildeten Langloches verändern, wobei sich auch gleichzeitig der Abstand der Abstreukante zur Drehachse ändert.

Dadurch, daß sich der Abstand der Abstreukante der Wurfschaufel von der Rotationsachse der Schleuderscheibe und der horizontale Anschlagwinkel der Schaufeln verändern läßt, soll eine für jeden Einsatzfall gleichmäßige Verteilung der Düngemittel und anderer Stoffe auf den Boden zu erreichen sowie ein optimales Streubild zu erzeugen sein.

In der Praxis hat sich nun gezeigt, daß diese Einstellung nicht in allen Fällen ausreichend ist, vor allem, wenn mit ein und demselben Schleuderdüngerstreuer Düngemittel über Arbeitsbreiten von 6 bis zu 24 m und mehr verteilt werden sollen. Hierbei hat sich nun herausgestellt, daß es unumgänglich ist, mehrere Schleuderscheiben mit unterschiedlich langen Wurfschaufeln bzw. mit unterschiedlich großen Abständen der Abstreukanten der Wurfschaufel zur Drehachse einzusetzen.

Bei einem Schleuderdüngerstreuer, der in der Praxis bekanntgeworden ist, sind für verschiedene Arbeitsbreiten bzw. verschiedene Düngemittelsorten entsprechend ausgebildete Streuscheiben mit entsprechend unterschiedlichen Wurfschaufeln einzusetzen. Inzwischen ist jedoch dieses System derart unübersichtlich geworden, da die Anzahl der verschiedenen Streuscheiben mit unterschiedlichen Wurfschaufeln fast unüberschaubar groß geworden ist, daß es in der Praxis immer wieder zu Verwechselungen kommt.

Des weiteren ist durch den Prospekt "AMAZONE-ZAU Die konsequente Weiterentwicklung der AMAZONE-Zentrifugalstreuer-Technik!" mit dem Druckvermerk "D 508* 4.84" ein Schleuderdüngerstreuer mit werkzeuglos auswechselbaren Streuscheiben bekannt. Für diesen Düngerstreuer werden verschiedene Streuscheibentypen, mit unterschiedlich langen und unterschiedlichen Abwurfwinkeln aufweisende Wurfschaufeln, beschrieben , die entsprechend den jeweiligen Einsatzverhältnissen gegeneinander austauschbar sind. Mittels dieses Streuscheibenwechselsystems läßt sich auf einfachste Weise ein Streuscheibenwechsel vornehmen, wobei je nach Einsatzfall Normal-, Breit-, verschiedene Sonder- und/oder verschiedene Grenzstreuscheiben montiert werden können. Mit diesen verschiedenen Streuscheiben und ihren unterschiedlich langen und unterschiedlich angestellten Wurfschaufeln lassen sich nun alle handelsüblichen Mineraldünger bis zu einer Arbeitsbreite von bis zu 24m exakt verteilen, daß ein optimales Streubild erzeugt wird. Mittels dieses Streuscheibenwechselsystems ist es möglich, die verschiedenen Arbeitsbreiten an das jeweilige Fahrgassensystem anzupassen.

Da auf einem landwirtschaftlichen Betrieb die unterschiedlichsten Düngersorten ausgebracht werden müssen, ist es notwendig, mehrere verschiedene Streuscheibentypen einzusetzen, um so je nach Düngersorte die unterschiedlichen Arbeitsbreiten zu erreichen und die Düngemittel gleichmäßig zu verteilen. Die Benutzer dieser Schleuderdüngerstreuer müssen also mehrere unterschiedliche Streuscheibentypen lagern. Aus dem selben Grunde ist die Lagerhaltung der unterschiedlichen Streuscheibentypen auch bei dem Düngerstreuerhersteller sehr groß, und daher aufwendig und zu dem kostspielig und teuer.

Des weiteren sind Düngerstreuer in der Praxis im Einsatz, bei denen je nach Arbeitsbreite und Düngersorte die Wurfschaufeln, welche gleiche Lagen aufweisen, auf den Schleuderscheiben in unterschiedliche Stellungen eingestellt werden müssen. Zusätzlich zu den verschiedenen Schaufeleinstellungen muß auch noch die Drehzahl der Schleuderscheiben für jede Arbeitsbreite entsprechend eingestellt werden und eine Abwinklung und Höheneinstellung des Schleuderdüngerstreuers muß ebenfalls vorgenommen werden.

Darüber hinaus müssen die Schleuderstreuer (beispielsweise Amazone ZA-U und andere sich in der Praxis befindliche Schleuderstreuer) für Arbeitsbreiten bis zu 24 m und mehr in ihrer Neigung und in ihrer Höhenlage zum Boden für die entsprechende Arbeitsbreite und zum Ausbringen des entsprechenden Düngers entsprechend genau eingestellt werden. D.h. also, daß zum Einstellen des Schleuderstreuers auf die jeweilige Düngersorte und jeweilige Arbeitsbreite sehr viele Einstellungen, wie Wahl der Streuscheiben, Wahl der Schaufelstellung, Höheneinstellung und Neigung der Maschine sowie Drehzahlverstellung der Schleuderscheiben vorgenommen werden müssen. Die Maschine muß also u.a. auch in verschiedenen Höhen eingestellt und unterschiedlich abgewinkelt werden.

Diese Einstellverfahren bei den heute modernen Streuern, die auf verschiedene Arbeitsbreiten von 10 bis 24m und mehr einstellbar sind, sind für den Landwirt in der Praxis einfach viel zu aufwendig und verwirrend. Es können einfach viel zu viele Fehler bei der Einstellung des Schleuderstreuers gemacht werden. Bei älteren Typen von Schleuderstreuern war es überhaupt nicht möglich, diese Schleuderstreuer auf Arbeitsbreiten von 10 bis 24m und mehr einzustellen.

Diese bisherigen Einstellverfahren für Schleuderstreuer der modernen Art, die auf Arbeitsbreiten von 10 bis 24m und mehr einstellbar sind sollen wesentlich vereinfacht und präzisiert werden.

Der Erfindung liegt daher die Aufgabe zugrunde, den bekannten Schleuderdüngerstreuer für den praktischen Gebrauch wesentlich zu verbessern und gleichzeitig für den Landwirt einfacher einstellbar zu gestalten.

Diese Aufgabe wird erfindungsgemäß durch die kennzeichnenden Maßnahmen des Anspruches 1 gelöst.

Infolge dieser Maßnahmen ist es in überraschend und einfachster Weise möglich, die Wurfschaufeln auf die jeweilige Position einzustellen. Infolge dieser Maßnahme ist es in überraschender Weise gelungen, die Einstellung der Arbeitsbreite des Schleuderstreuers ausschließlich über die Einstellung der Wurfschaufeln auf den Schleuderscheiben vorzunehmen. Hierbei ist von entscheidender Bedeutung, daß die Wurfschaufeln eine wesentlich unterschiedlich große Lage bzw. die Abstreukanten wesentlich differde Abstände zur Drehachse aufweisen. Unter wesentlich werden mehrere Centimeter (zumindest 5 cm) verstanden. Es ist nicht mehr erforderlich, den Schleuderstreuer abzuwinkeln und auf verschiedene Höhen einzustellen, um über dieses umständliche Verfahren den Schleuderstreuer auf die verschiedenen und jeweils geschwünschten Arbeitsbreite einzustellen. Mit dieser neuen Generation von Schleuderstreuern, die durch diese erfindungsgemäße Maßnahme geschaffen werden, ist es möglich, die Schleuderstreuer nicht nur auf Arbeitsbreiten von 9 bis 15m oder von 15 auf 24m einzustellen, sondern es ist erstmalig möglich geworden, die Schleuderstreuer auf Arbeitsbreiten von weniger als 12m und auf ein Mehrfaches von 12m einzustellen. Der Schleuderstreuer kann also in einfachster Weise auf Arbeitsbreiten von weniger als 12m und wesentlich mehr als 24m, bis zu 36m und mehr eingestellt werden. Es ist also hiermit in einfachster Weise möglich, auch das neue Verfahren "Stickstoffdünger auf 12m und bei weniger Stickstoff bzw. Grunddünger bzw. Spätdüngung die doppelte Arbeitsbreite - also 24m oder sogar die dreifache Arbeitsbreite - 32m" erreicht werden. Durch die Einstellung des Schleuderstreuers auf verschiedene Arbeitsbreiten nur noch durch unterschiedliche Schaufeleinstellung nach Skalen, die vorzugsweise unverwechselbar ausgebildet sind, ist die gesamte Einstellung des Schleuderstreuers wesentlich einfacher, sicherer und viel präziser geworden. In einigen Fällen kann es erforderlich sein, daß man zwei verschiedene Schleuderscheibenpaare für die Abdeckung der gesamten Arbeitsbreite von beispielsweise 9 bis 24m und mehr vorsieht, wobei das eine Schleuderscheibenpaar für die Arbeitsbreite von 9 bis 18m und das andere Schleuderscheibenpaar von 15 bis 24m und mehr (bis 36m) vorgesehen ist. Die Einstellung auf "Zwischenarbeitsbreiten" erfolgt ausschließlich über die Einstellung der Schaufeln mittels Skalen. Damit jede Wurfschaufel genau eingestellt werden kann, ist erfindungsgemäß vorgesehen, daß für jede Wurfschaufel eigene Arretierungs- und/oder Einstellmarkierungen vorgesehen sind. Diese Markierungen sind mit Symbolen (Zahlen, Buchstaben) gekennzeichnet, damit eine genaue Einstellung möglich ist.

Um auch hier eine narrensichere Einstellung zu gewährleisten, ist erfindungsgemäß vorgesehen, daß für die verschiedenen Streuscheiben, die gegeneinander austauschbar sind, verschiedene und unverwechselbare Symbole verwendet werden, so daß eine unverwechselbare Einstellung, die sicher und präzise ist, erfolgen kann.

Eine derartige erfindungsgemäße Einstellung ist der EP-PS 00 17 128 mittels einfacher Skalen auf verschiedene Arbeitsbreiten und Düngersorten nicht beschrieben.

Um die Einstellung der Wurfschaufeln auf den Schleuderscheiben für die entsprechende Arbeitsbreite wirklich narrensicher und präzise zugestalten ist erfindungsgemäß vorgesehen, daß die Symbole für die Markierungen oder Wurfschaufeln jeder Schleuderscheibe unterschiedliche und unverwechselbar sind. Somit erfolgt eine eindeutige Zuordnung der Markierungselemente zu jeder Wurfschaufel, so daß Verwechselungen überhaupt nicht mehr vorkommen können. Der Landwirt entnimmt seiner Streutabelle die jeweilige Einstellung für die Wurfschaufel und stellt sie dann ein, denn den meisten Einstellflächen werden die langen und die kurzen Wurfschaufeln mit unterschiedlichen Winkeln in der Scheibenebene eingestellt. Daher ist eine eindeutige Zuordnung der Skalen und -bezeichnungen sehr wichtig.

Des weiteren ist in erfindungsgemäßer Weise vorgesehen, daß verschiedenartige Schleuderscheiben und/oder Wurfelemente in auswechselbarer Weise vorgesehen sind, daß Grenzstreuscheiben und Schleuderscheiben für das "Normal-" und "Breitstreuen" vorgesehen sind, daß für die als Grenzstreuscheibe eingesetzte Schleuderscheibe gleiche Markierungen und Bezeichnungen für die Einstellskalen aller Wurfschaufeln vorgesehen sind, und daß für die zum "Normal-" und "Breitstreuen" vorgesehenen Schleuderscheiben für jede Wurfschaufel verschiedene, "unverwechselbare" Markierungen und Bezeichnungen für die Einstellskalen vorgesehen sind.

Damit es zu keiner Verwechselung der aus der Streutabelle entnommenen Einstelldaten für die Einstellung der Länge der teleskopartig ausgebildeten Wurfschaufeln und der Winkelanstellung dieser Wurfschaufeln kommt, ist erfindungsgemäß vorgesehen, daß für die Einstellung der Länge der telekopartigen Wurfschaufeln andere Markierungselemente und/oder Bezeichnungen, Symbole wie für die Winkeleinstellung vorgesehen sind.

Sollen die unterschiedlichsten Düngersorten über einen sehr großen Arbeitsbreitenbereich von beispielsweise 6 bis 24m ausgebracht werden, kann es aus Gründen der Qualität des Streubildes sinnvoll sein, daß die Schleuderscheiben gegen anders ausgebildete Schleuderscheiben austauschbar auf ihren Antriebswellen angeordnet sind. Es wird aber praktisch nur noch zwischen zwei Schleuderscheibentypen unterschieden. Die Erfindung berücksichtigt hierbei, daß die "normalen" Schleuderscheiben über z.B. Arbeitsbreiten von 12 bis 24m mit relativ langen Wurfschaufeln gegen Schleuderscheiben mit relativ kurz ausgebildeten Wurfschaufeln zum "Grenzstreuen" austauschbar sind. Beim "Grenzstreuen" muß zu der dem Feldrand zugewandten Seite des Streuers der Dünger bis an den Feldrand und praktisch nicht über den Feldrand hinaus in der erforderlichen Streustärke geworfen werden, weil auf der dem Feldrand zugewandten Seite bei Überlappung des Streubildes erfolgt.

Hierbei ist weiterhin erfindungsgemäß vorgesehen, daß auch die Schleuderscheiben zum "Grenzstreuen" Wurfschaufeln aufweisen, die teleskopartig längenveränderbar sowie in horizontaler Ebene winkelverschwenkbar auf den Schleuderscheiben angeordnet sind. Hierdurch kann der Düngerstreuer in einfachster Weise auf verschiedene Arbeitsbreiten, die beispielsweise einem Mehrfachen der Drillmaschinenarbeitsbreite entsprechen, zum Streuen zum Feldrand hin eingestellt werden. Weist die Drillmaschine beispielsweise eine Arbeitsbreite von 3m auf und die Arbeitsbreite des Düngerstreuers beträgt beispielsweise 12m, liegt die erste Fahrgasse im halben Abstand der Streubreite des Düngerstreuers, also 6m zum Feldrand. Mit Hilfe dieser Schleuderscheiben zum "Grenzstreuen" läßt sich mit nur einem "Grenzstreuscheibentyp" eine Anpassung an alle Fahrgassensysteme vornehmen, wobei das Streubild vom Feldrand steil abfällt. Bei den gebräuchlichen Arbeitsbreiten von 12 bis 24 m eines Zentrifugaldüngerstreuers ersetzt die in erfindungsgemäßer Weise ausgebildete Schleuderscheibe zum "Grenzstreuen" fünf und mehr Grenzstreuscheibentypen.

Die beiden, auf einer Schleuderscheibe angeordneten Wurfschaufeln sind derart in erfindungsgemäßer Weise ausgebildet, daß jede Wurfschaufel aus zumindest zwei zueinander in Längsrichtung der Wurfschaufeln verschiebbaren Teilen besteht, wobei der innere Teil mit dem anderen Teil in horizontaler Ebene winkelverschwenkbar ist. Hierdurch lassen sich die verschiedenen Arbeitsbreiten der Schleuderscheiben unter Berücksichtigung der Streuguteigenschaften der jeweilig auszustreuenden Düngersorte exakt einstellen. Zum Verteilen der Düngemittelpartikel über den gesamten Streubereich eines Schleuderdüngerstreuers kann es sinnvoll sein, daß die Wurfschaufeln aus zwei oder mehr zueinander in Längsrichtung verschiebbaren Teilen bestehen, wodurch eine optimale Anpassung an die Streuguteigenschaften der jeweils auszustreuenden Düngersorte erreicht wird.

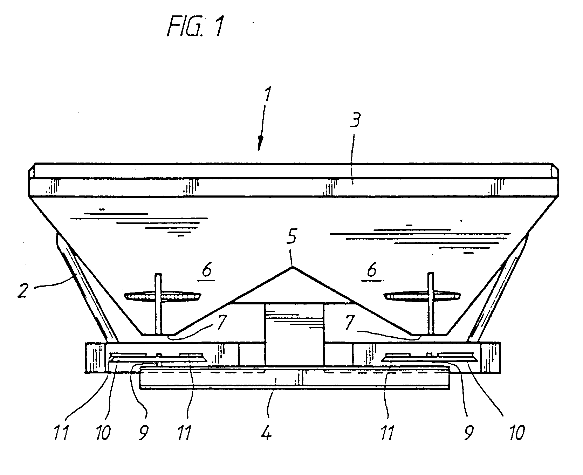

Weitere Einzelheiten der Erfindung sind der Beispielsbeschreibung und den Zeichnungen zu entnehmen. Hierbei zeigen
- Fig. 1: den in erfindungsgemäßer Weise ausgebildeten Schleuderdüngerstreuer in der Ansicht von hinten,
- Fig. 2: die linke Schleuderscheibe mit den erfindungsgemäßen Wurfschaufeln für das "Normalstreuen" in der Draufsicht und vergrößertem Maßstab,
- Fig. 3: die erfindungsgemäße rechte Schleuderscheibe,
- Fig. 4: Teilansicht der linken Schleuderscheibe mit einer erfindungsgemäßen Wurfschaufel für das "Normalstreuen" in der Draufsicht und vergrößertem Maßstab,
- Fig. 5: die Wurfschaufel gemäß Fig. 4 in der Ansicht V - V,

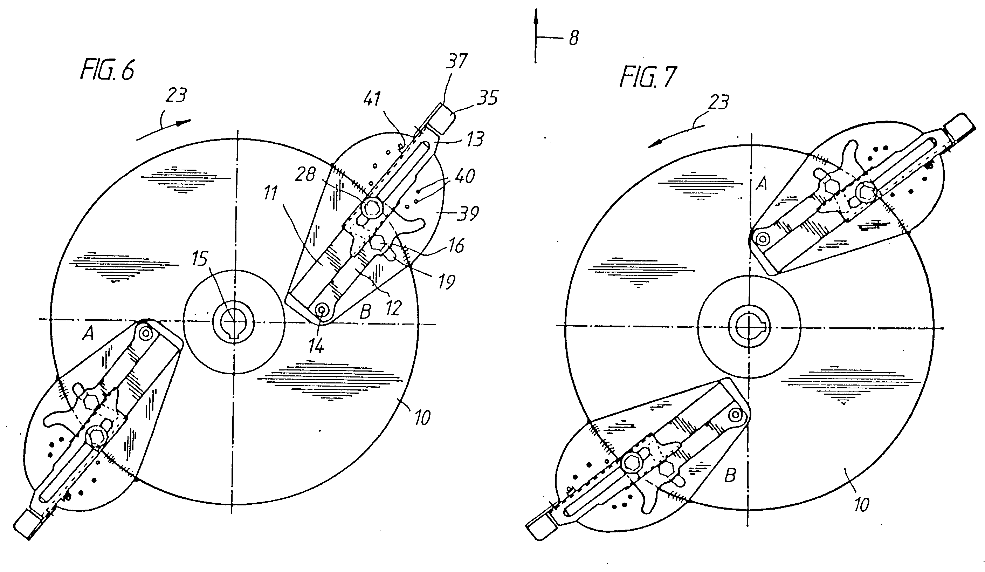

- Fig. 6: eine andere linke Schleuderscheibe mit erfindungsgemäßen Wurfschaufeln für das "Normalstreuen",
- Fig. 7: die erfindungsgemäße rechte Schleuderscheibe,
- Fig. 8: die linke Schleuderscheibe mit den erfindungsgemäßen Wurfschaufeln für das "Grenzstreuen",
- Fig. 9: die erfindungsgemäße rechte Schleuderscheibe,
- Fig. 10: Teilansicht der linken Schleuderscheibe mit einer erfindungsgemäßen Wurfschaufel für das "Grenzstreuen" in der Draufsicht und vergrößertem Maßstab,
- Fig. 11: die Wurfschaufel gemäß Fig. 10 in der Ansicht XI - XI,
- Fig. 12: die Wurfschaufel gemäß Fig. 10 in der Ansicht XII - XII,
- Fig. 13: das Schleuderscheibenpaar für die "größeren" Arbeitsbreiten in der Draufsicht,
- Fig. 14: das Schleuderscheibenpaar für die "kleineren" Streubreiten in der Daufsicht,
- Fig. 15: die erfindungsgemäße linke Grenzstreuscheibe,
- Fig. 16: die erfindungsgemäße rechte Grenzstreuscheibe,
- Fig. 17: die rechte Schleuderscheibe mit winkelverschwenkbaren Wurfschaufeln für das "Normalstreuen" in der Draufsicht,
- Fig. 18: die der einen Wurfschaufel zugeordneten Einstellskala in der Draufsicht und vergrößertem Maßstab,
- Fig. 19: die der anderen Wurfschaufel zugeordnete Einstellskala in der Daufsicht und vergrößertem Maßstab,
- Fig. 20: die in erfindungsgemäßer Weise ausgerüstete rechte Schleuderscheibe mit winkelverschwenkbaren Wurfschaufeln für das "Breitstreuen" in der Draufsicht,
- Fig. 21: die Einstellskala für die eine Wurfschaufel der "Breitstreuscheibe" in Draufsicht und vergrößertem Maßstab,
- Fig. 22: die andere Einstellskala der "Breitstreuscheibe" in der Draufsicht und vergrößertem Maßstab,
- Fig. 23: die rechte Schleuderscheibe mit winkelverschwenkbaren und teleskopartig ausgebildeten Wurfschaufeln für das "Normal- und Breitstreuen" in der Draufsicht,

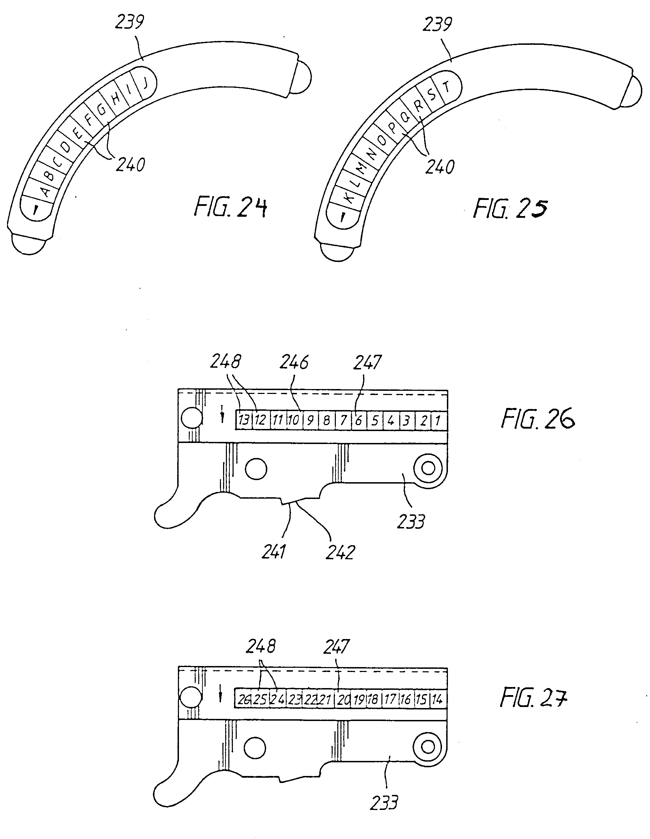

- Fig. 24: in in erfindungsgemäßer Weise ausgebildete Einstellskala für die eine Wurfschaufeln der Schleuderscheibe gemäß Fig. 23 in der Draufsicht und vergrößertem Maßstab,
- Fig. 25: die andere erfindungsgemäß ausgebildete Einstellskala für die andere Wurfschaufel der Schleuderscheibe gemäß Fig. 23 in der Draufsicht und vergrößertem Maßstab,
- Fig. 26: der innere Teil der verschwenkbaren, teleskopartig ausgebildeten Wurfschaufel der Schleuderscheibe gemäß Fig. 23 mit der in erfindungsgemäßer Weise ausgebildeten Einstellskala in der Draufsicht und vergrößertem Maßstab,
- Fig. 27: der verschwenkbare innere Teil der anderen teleskopartig ausgebildeten Wurfschaufel der Schleuderscheibe gemäß Fig. 23 mit der in erfindungsgemäßer Weise ausgebildeten Einstellskala in der Draufsicht und vergrößertem Maßstab,
- Fig. 28: die rechte Schleuderscheibe mit winkelverschwenkbaren und teleskopartig ausgebildeten Wurfschaufeln für das "Grenzstreuen" in der Draufsicht,

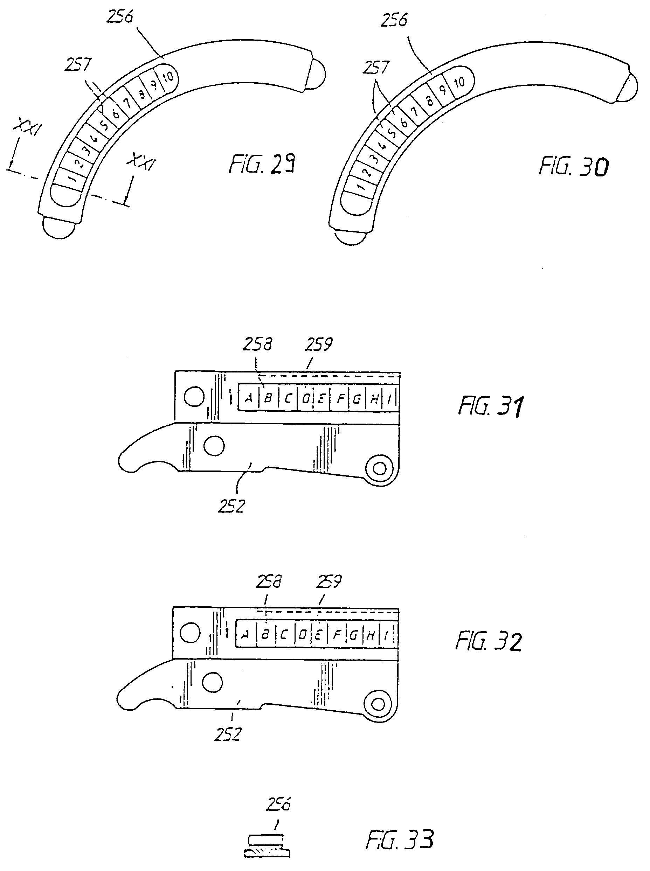

- Fig. 29: die in erfindungsgemäßer Weise ausgebildete Einstellskala der einen Wurfschaufel der "Grenzstreuscheibe mit den teleskopartig ausgebildeten Wurfschaufeln gemäß Fig. 28,
- Fig. 30: die in erfindungsgemäßer Weise ausgebildete Einstellskala der "Grenzstreuscheibe" gemäß Fig. 28,
- Fig. 31: das innere Teil der verschwenkbaren, teleskopartig ausgebildeten Wurfschaufel für das "Grenzstreuen" mit der erfindungsgemäßen Einstellskala in der Draufsicht und vergrößertem Maßstab,
- Fig. 32: das andere innere, verschwenkbare Teil der teleskopartig ausgebildeten Wurfschaufel der "Grenzstreuscheibe" gemäß Fig. 28 mit der erfindungsgemäßen Ein- stellskala in der Draufsicht und vergrößertem Maßstab und
- Fig. 33: die Einstellskala gemäß Fig. 28 in der Ansicht XXI - XXI.

Der Schleuderdüngerstreuer 1 ist mit dem Rahmen 2 ausgestattet, an dem der Vorratsbehälter 3 und ein Winkelgetriebe 4 angebracht sind. Hierbei ist der untere Bereich des Vorratsbehälters 3 durch ein dachförmiges Mittelteil 5 in zwei Auslauftrichter 6 unterteilt, in deren Bodenplatten 7 sich nicht näher dargestellte, bekannte Auslauföffnungen befinden. Diese Auslauföffnungen sind mit Hilfe von schieberförmigen Dosierelementen für sich verschließbar und in unterschiedlichen Öffnungsweiten einstellbar.

Unterhalb der Auslauföffnungen sind quer zur Fahrtrichtung 8 auf den Ausgangswellen 9 des Winkelgetriebes 4 die Schleuderscheiben 10 nebeneinander angeordnet. Auf diesen Schleuderscheiben 10 sind jeweils zwei Wurfschaufeln 11 befestigt. Die Befestigung der Schleuderscheiben 10 auf den Ausgangswellen 9 des Winkel- getriebes 4 ist derart ausgebildet, daß sich die Schleuderscheiben 10 vorzugsweise werkzeuglos von diesen Ausgangswellen 9 montieren bzw. demontieren lassen.

Den einzelnen Schleuderscheiben 10 wird das sich im Vorratsbehälter 3 des Schleuderdüngerstreuers 1 befindliche Düngemittel in genau einstellbaren Mengen zugeführt. Die rotierenden Schleuderscheiben 10 verteilen den auf die jeweilige Schleuderscheibe 10 auftreffenden Düngemittelstrom gleichmäßig über die genau einstellbare Arbeitsbreite S des Schleuderdüngerstreuers 1.

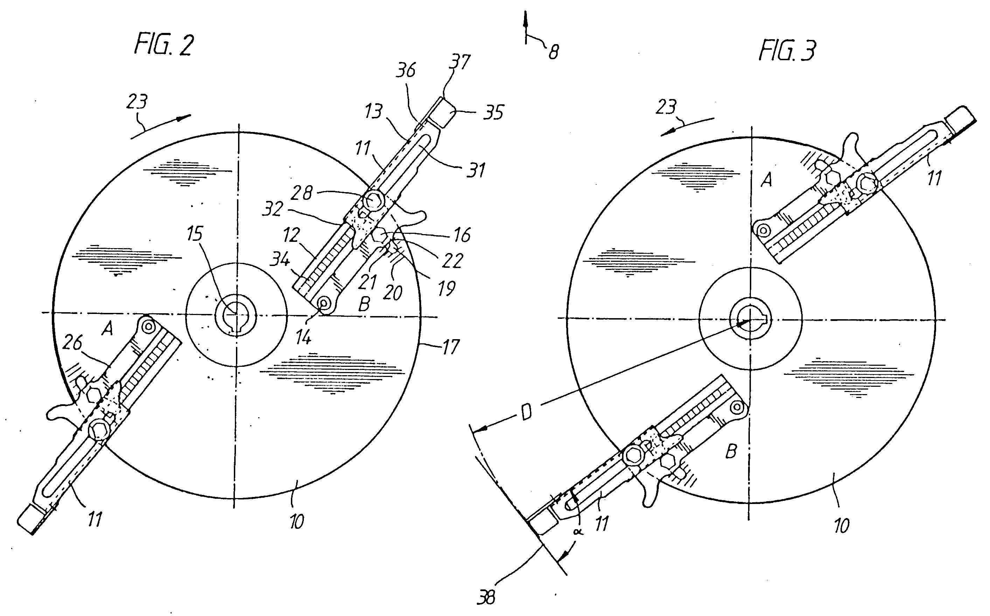

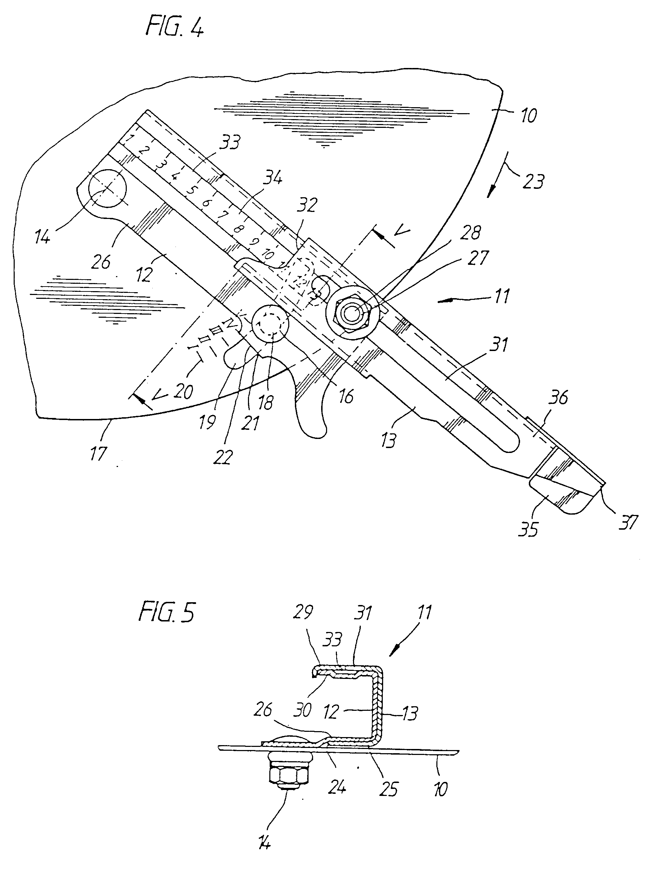

Die Fig. 2 und 3 zeigen die nebeneinander angeordneten Schleuderscheiben 10 mit den jeweils auf diesen Schleuderscheiben 10 angeordneten Wurfschaufeln 11. Bei diesen Wurfschaufeln 11 handelt es sich um relativ lange Wurfschaufeln, die für das sog. "Normalstreuen" vorgesehen sind. Die jeweiligen Wurfschaufeln 11 bestehen aus den zwei teleskopartig in Längsrichtung der Wurfschaufel 11 zueinander verschiebbaren und in verschiedenen Längen der Wurfschaufel 11 festsetzbaren Teile 12 und 13. Diese Wurfschaufeln 11 sind derart ausgebildet, daß der innere Teil 12 der Wurfschaufel 11 in radialer Richtung unverschiebbar ist. Diese längenveränderbaren Wurfschaufeln 11 sind jeweils winkelverschwenkbar auf der Schleuderscheibe 10 angeordet. Hierbei befindet sich die Schwenkachse 14 einer jeden Wurfschaufel 11 in der der Rotationsachse 15 der jeweiligen Schleuderscheibe 10 zugewandten Hälfte des inneren Teiles 12 der Wurfschaufel 11. Der Festsetzmechanismus 16 der winkelverschwenkbaren Schaufel 11 befindet sich in der dem äußeren Rand 17 der Schleuderscheibe 10 zugewandten Hälfte des inneren Teiles 12 der Wurfschaufel 11. Dieser Festsetzmechanismus 16 ist beispielsweise als lösbare Schraube 18 ausgebildet und wirkt mit dem sich in der Schleuderscheibe 10 befindlichen Langloch 19 zusammen. Im Bereich dieses Langloches 19 sind die Markierungen 20 gut sichtbar angeordnet und stellen die verschiedenen Positionen dar, in denen die winkelverschwenkbaren Wurfschaufeln 11 einstellbar sind. Hierzu wirkt die auf der Schleuderscheibe 10 aufliegende Kante 21 des inneren Teiles 12 der jeweiligen Wurfschaufel 11 als Zeiger 22 mit den auf der Schleuderscheibe 10 angeordneten Markierungen 20 zusammen. Zum Winkelverschwenken der Wurfschaufeln 11 ist es selbstverständlich auch möglich, das Langloch 19 durch einzelnen, die jeweiligen Winkelstellungen der Wurfschaufel 10 repräsentierende einzelne Löcher auszubilden Die beiden Teile 12 und 13 der Wurfschaufel 11 weisen eine U-förmigen Querschnitt auf, wobei sich der an dem inneren Teil 12 anschließende äußere Teil 13 der Wurfschaufel 11 eine der Außenkontur der Innenschaufel 12 entsprechende Innenkontur aufweist und in Drehrichtung 23 der Schleuderscheiben 10 gesehen hinter der Innenschaufel 12 angeordnet ist. Um einen freien Raum 24 für den unteren Schenkel 25 des verschiebbaren äußeren Teiles 13 zu schaffen, ist die Innenschaufel 12 über einen Teil ihrer Tiefe zur Schaffung dieses freien Raumes 24 durchgekröpft.

Die jeweilige Lage des inneren Teiles 12 und des äußeren Teiles 13 der Wurfschaufel 11 zueinander wird mittels des als Schraubverbindung 27 ausgebildeten Festsetzmechanismusses 28 bestimmt. Dieser Festsetzmechanismus 28 zum Festsetzen der zueinander in Längsrichtung der Wurfschaufel 11 verschiebbaren Teile 12 und 13 ist zwischen den oberen Schenkeln 29 und 30 der zueinander verschiebbaren Teile 12 und 13 angeordnet. Das äußere Teil 13 weist das Langloch 31 auf und ist somit stufenlos gegenüber dem inneren Teil 12 verstellbar. Die Kante 32 des ausziehbaren äußeren Teiles 13 wirkt mit der in der Tiefung 33 des oberen Schenkels 30 des inneren Teiles 12 angeordnent Skala 34 zusammen. An dem verschiebbaren äußeren Teil 13 der Wurfschaufel 11 ist ein weiteres als sog. Schwenkschaufel ausgebildetes Teil 35, welches um die Schwenkachse 36 in aufrechter Ebene schwenkbar ist, befestigt. Dieses Teil 35 läßt sich in zwei verschiedene Positionen arretieren, so daß sich die Flugkurve der von den Wurfschaufeln verteilten Düngemittelpartikel verändern läßt, so daß sich diese Wurfschaufeln sowohl für das "Normalstreuen" und für die sog. Spätdüngung verwenden lassen.

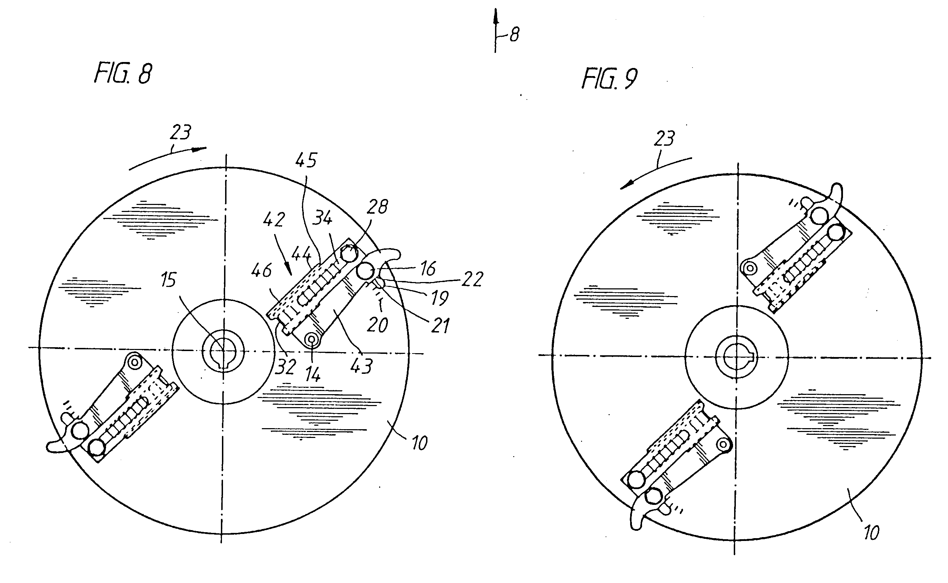

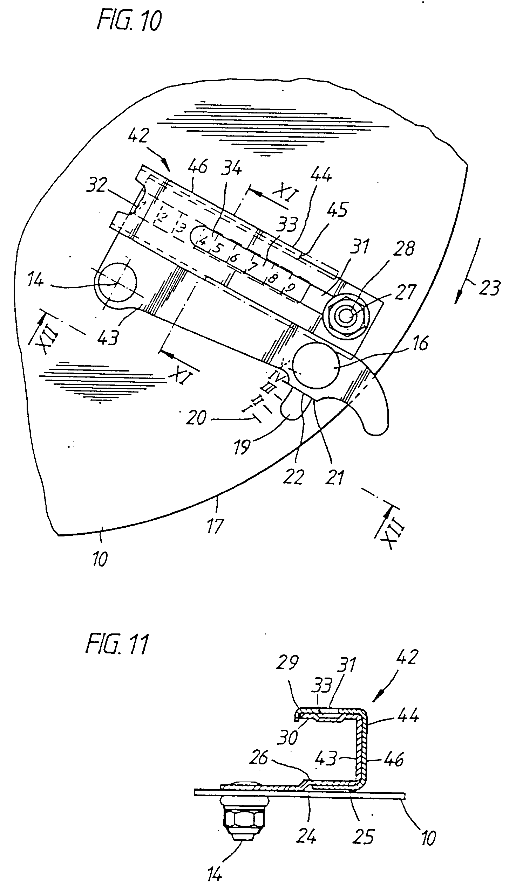

Damit die verschiedenen handelsüblichen Düngersorten exakt und in der gewünschten Arbeitsbreite verteilt werden können, lassen sich die auf den Schleuderscheiben angeordneten Wurfschaufeln individuell für die jeweils auszustreuende Düngersorte einstellen. Dieses Einstellen der Wurfschaufeln erfolgt nach den Angaben einer Streutabelle. Hierzu sind die auf einer Schleuderscheibe 10 befestigten Wurfschaufeln 11 beispielsweise mit den Buchstaben A und B gekennzeichnet. Die Fig. 8 und 9 zeigen jeweils auf den Schleuderscheiben 10 angeordnete, kürzere Wurfschaufeln 11, mit denen das sog. "Grenzstreuen" durchgeführt werden kann. Diese Grenzstreuwurfschaufeln 42 unterscheiden sich nur in der Ausbildung des verschiebbaren äußeren Teiles 13, daß bei diesen sog. Grenzstreuwurfschaufeln 43 wesentlich kürzer ist als das äußere Teil 13 der in den vorhergehenden Fig. beschriebenen Wurfschaufeln. Das innere Teil 43 der Grenzstreuwurfschaufel 42 unterscheidet sich nur hinsichtlich eines verkürzten Rückenteiles 44 von dem inneren Teil der vorab beschreibenen Wurfschaufel. Dieses Verkürzen des Rückenteiles 44 wird erforderlich, um den Abstand der Abstreukante 45 von der Rotationsachse 15 der Schleuderscheibe 10 bei der Grenzstreuwurfschaufel 42 wesentlich zu verringern. Dieses ist erforderlich, um die Arbeitsbreite der mit diesen Grenzstreuwurfschaufeln 42 versehenen Schleuderscheibe wesentlich zu verringern und ein am Feldrand steil abfallendes Streubild zu erhalten. Die jeweilige Einstellung dieser Grenzstreuwurfschaufeln 42 hinsichtlich ihrer Länge und ihres Anstellwinkels .... erfolgt in bereits erwähnter Weise nach den entsprechenden Angaben einer Streutabelle. Das Rückenteil 44 des inneren Teiles 43 der Grenzstreuwurfschaufel 42 kann wie mit strichpunktierten Linien gemäß Fig. 10 dargestellt, auch unterschiedlich lang ausgebildet sein. Hierdurch ergibt sich bei nicht ausgezogenem äußeren Teil 46 eine Verlagerung der Abstreukante 45.

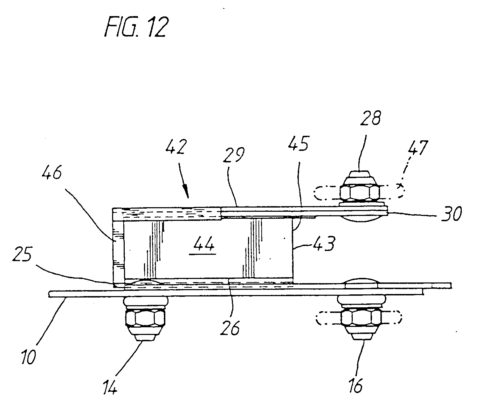

Zur Vereinfachung der jeweiligen Stellungen der Wurfschaufeln 11 und 42 kann es sinnvoll sein, die als Schraubverbindungen 18 und 27 ausgebildeten Festsetzmechanismen 16 und 28 mit den in Fig. 12 mit strichpunktierten Linien dargestellten Flügelmuttern 47 zu versehen. Aus Gründen der Stabilität kann es sinnvoll sein, den Festsetzmechanismus 28 durch mehrere einzelne, nebeneinander angeordnete Schraubverbindungen zu ersetzten. Mittels dieser auf den jeweiligen Schleuderscheiben 10 aufgesetzten längenveränderbaren und winkelverstellbaren Wurfschaufeln 11 und 42 ist es auf einfachste Weise möglich, unterschiedliche Arbeitsbreiten einzustellen, wobei die Wurfschaufeln 11 und 42 entsprechend den jeweiligen Streuguteigenschaften der jeweils auszustreuenden Düngersorte angepaßt werden kann.

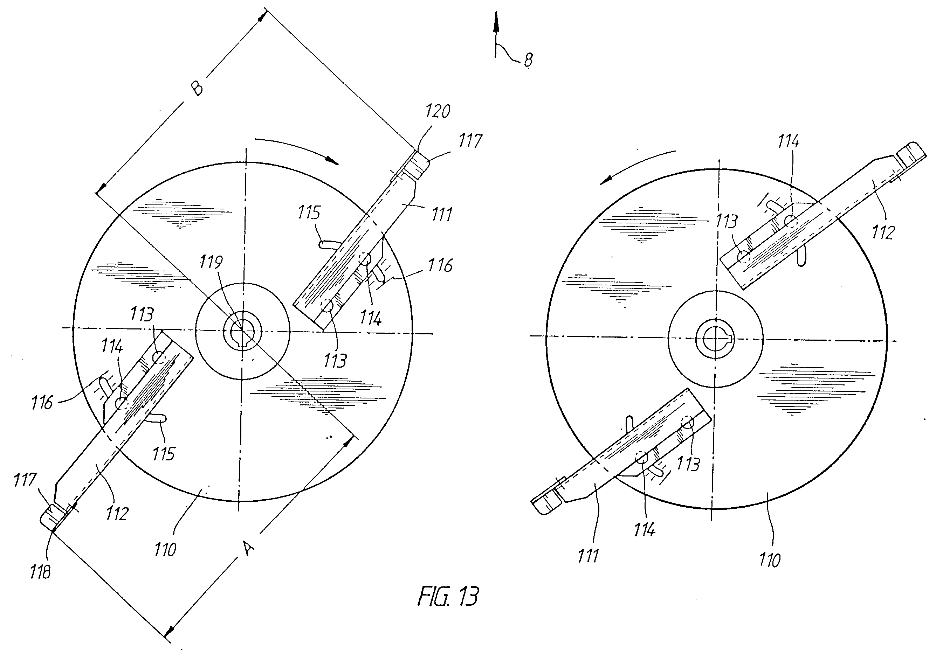

Die Schleuderscheiben 110 gemäß Fig. 13 sind für das Verteilen der Düngemittel über die größeren Arbeitsbreiten von 15 bis 24 m vorgesehen. Auf den Schleuderscheiben 110 sind jeweils spiegelbildlich zueinander die kürzere Wurfschaufel 111 und die längere Wurfschaufel 112 angeordnet. Die Wurfschaufeln 111 und 112 sind jeweils mit den Schraubbolzen 113 und 114 auf die Schleuderscheibe angeordnet.

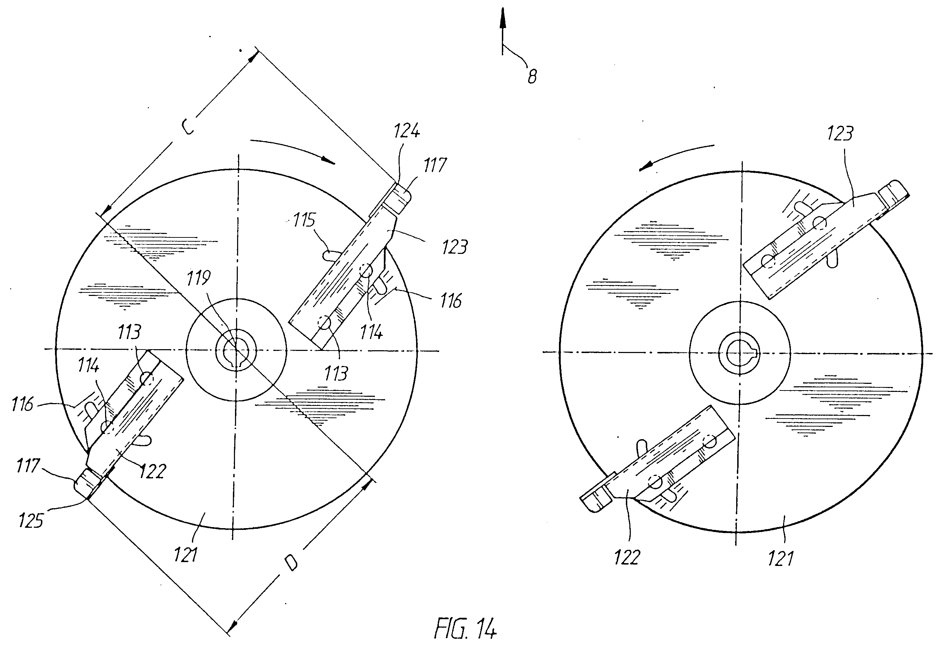

Für das Streuen der Düngemittelpartikel über kleinere Arbeitsbreiten von 6 bis 15 m werden die Schleuderscheiben 110 gemäß Fig. 13 gegen die Schleuderscheiben 121 gemäß Fig. 14 ausgetauscht. Auf diesen Schleuderscheiben 121 sind die kürzere Wurfschaufel 122 und die längere Wurfschaufel 123 angeordnet.

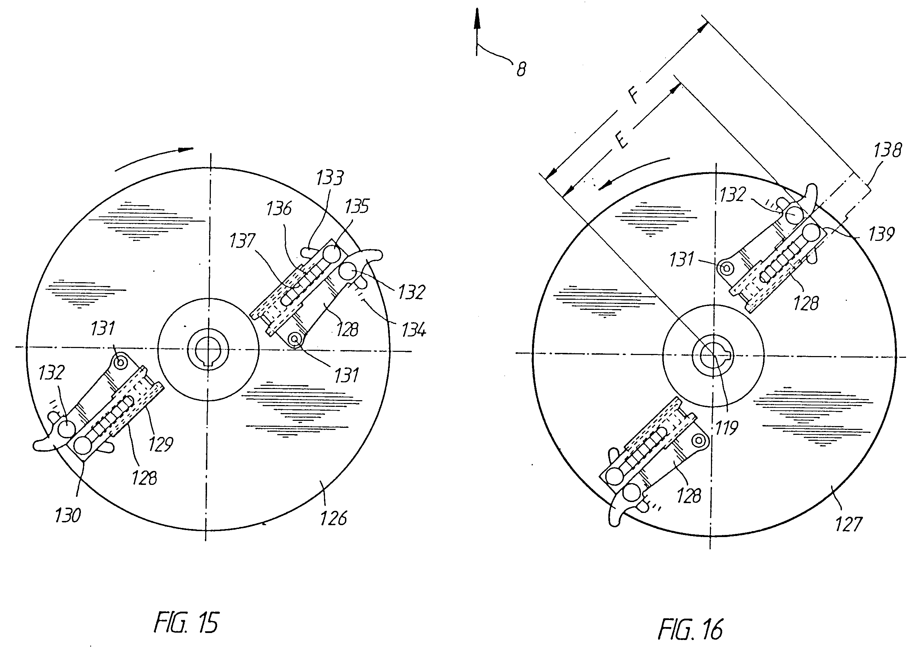

Zur Durchführung des "Grenzstreuens", je nach dem auf welcher Seite des Schleuderdüngerstreuers die Feldrandgrenze liegt, ist eine der in den Fig. 15 und 16 dargestellte Grenzstreuscheibe einzusetzen. Wenn die Feldrandgrenze auf der linken Seite des Schleuderdüngerstreuers liegt, ist die linke Schleuderscheibe gemäß Fig. 13 oder 14 gegen die Schleuderscheibe 126 für das "Grenzstreuen" gemäß Fig. 15 auszutauschen. Liegt die Feldrandgrenze auf der rechten Seite des Schleuderdüngerstreuers, so ist die rechte Schleuderscheibe gemäß Fig. 13 bzw. 14 gegen die Schleuderscheibe 127 für das "Grenzstreuen" gemäß Fig. 16 auszutauschen. Auf den Grenzstreuscheiben 126 bzw. 127 sind die teleskopartig längenveränderbaren Wurfschaufeln 128 angeordnet. Die Wurfschaufeln 128 bestehen aus dem inneren Teil 129 und dem äußeren Teil 130. Das innere Teil 129 ist mittels der Schraubbolzen 131 und 132 auf der Grenzstreuscheibe 126 angeordnet. Der Schraubbolzen 132 ist in dem kreisförmigen Langloch 133, welches sich in der Schleuderscheibe 126 befindet, angeordnet. Hierdurch ist die Schaufel 128 um den Schraubbolzen 131 angeordnet und in verschiedenen Positionen mittels des Schraubbolzens 132 festzuklemmen. Das Einstellen der Wurfschaufel 128 wird durch die als Kerbe 134 ausgebildete Markierung erleichtert. Die jeweilige einstellung wird vom Hersteller angegeben. Der äußere Teil 130 der Grenzstreuschaufel 128 ist mittels des Schrauhbolzens 135 an dem inneren Teil 129 der Grenzstreuschaufel 128 befestigt. Damit das äußere Teil 130 der Grenzstreuschaufel 128 gegenüber dem inneren Teil 129 der Grenzstreuschaufel teleskopartig längenveränderbar und in unterschiedlichen Positionen festsetzbar ist, weist weist das äußere Teil 130 das Langloch 136 auf, in dem der Schraubbolzen 135, der an dem inneren Teil 129 der Grenzstreuschaufel 128 befestigt ist, geführt ist. Ebenfalls sind an der Grenzstreuschaufel 128 zwischen den inneren Teil 129 und dem äußeren Teil 130 als Kerben ausgebildete Markierungen 137 vorgesehen, um so die Länge der Wurfschaufeln 128 in einfacher Weise entsprechend der Herstellerangaben einstellen zu können. Die Grenzstreuschaufel 128 wird für "geringere" Grenzstreuabstände in die mit durchzogenen Linien dargestellte Stellung gebracht, während sie für "größere" Arbeitsbreiten in die mit strichpunktierte Linien angedeutete Stellung 138 zu bringen und zu befestigen ist. Die Wurfschaufeln 128 sind in unterschiedlichen Längen einzustellen, so daß die Abstreukante 139 der Wurfschaufel 128 für geringere Grenzstreuabstände einen Abstand von zumindestens 10 cm, vorzugsweise 13 cm und für das Bestreuen von größeren Grenzstreuabständen einen Abstand F von bis zu 32 cm, vorzugsweise 28 cm aufweist.

Der Unterschied zwischen den Abständen A und B sowie C und D der Abstreukanten der Streuschaufeln der beiden Streuscheiben 110 und 121 für die "größere" und die "kleinere" Streubreite zur Drehachse muß zumindestens 3 bis 10 cm betragen.

Des Weiteren müssen die Wurfschaufeln 122,123 für die "kleineren" Streubreiten sowie die Wurfschaufeln 111, 112 für die "größeren" Streubreiten so ausgebildet sein, daß die Abstreukante der Wurfschaufeln für die größeren Streubreiten um zumindest 5 cm und/oder 1/4 des Abstreukantenabstandes weiter von der Drehachse 119 entfernt sind als die Abstreukanten der Wurfschaufeln 122, 123 für die "kleineren" Streubreiten, während die Streukanten der Wurfschaufeln für die kleineren Streubreiten um zumindest 5 cm und/oder 1/4 des Abstreukantenabstandes weiter von der Drehachse 119 als die Abstreukanten der Wurfschaufeln 128 für das "Grenzstreuen" entfernt sein müssen.

Um die erfindungsgemäßen Wirkungen zu erzielen, weisen die Wurfschaufeln 111,112 für das Streuen über die "größeren" Streubreiten von 15 bis 24 m an ihren Abstreukanten 118, 120 eine Umfangsgeschwindigkeit von etwa 18 bis 37 m/sec, vorzugsweise ca. 23 m/sec für die kürzere Wurfschaufel 111 und ca. 30 m/sec für die längere Wurfschaufel 112 auf. Die Umfangsgeschwindigkeiten an den Abstreukanten 124,125 der Wurfschaufeln 122,123 für "kleinere" Streubreiten von 6 bis 15 betragen etwa 13 bis 26 m/sec, vorzugsweise ca. 17 m/sec für die kürzere Wurfschaufel 122 und ca. 21 m/sec für die längere Wurfschaufel 123. Die Umfangsgeschwindigkeit an den Abstreukanten 139 der Wurfschaufeln 128 für das Grenzstreuen betragen zwischen etwa 8 m/sec, vorzugsweise ca. 10 m/sec für kleinere Grenzstreuabstände von 5 und 6 m und 26 m/sec, vorzugsweise 21 m/sec für größere Grenzstreuabstände von 110 bis 112 m.

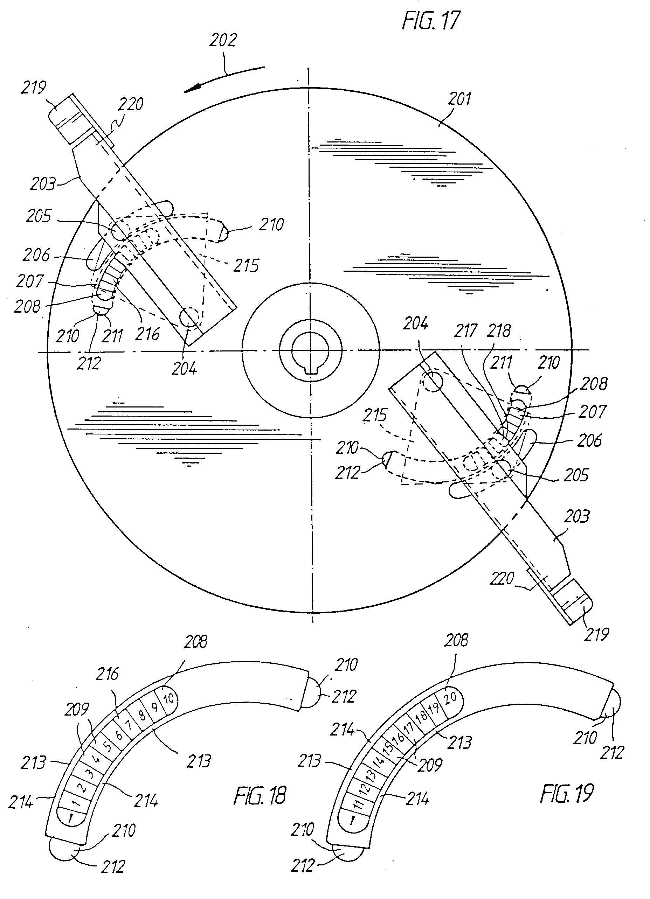

Die Fig. 17 zeigt die rechte Schleuderscheibe des Schleuderdüngerstreuers 1, die als "Normaldstreuscheibe" 201 ausgebildet ist. Die Schleuderscheiben des Schleuderdüngerstreuers werden gegenläufig angetrieben, wobei die rechte Schleuderscheibe 201 gemäß Fig. 17 in Pfeilrichtung 202 angetrieben wird. Die Schleuderscheibe 201 weist die beiden Wurfschaufeln 203 auf, die für das sog. "Normalstreuen" vorgesehen sind. Die jeweiligen Wurfschaufeln 203 sind winkelverschwenkbar um den Drehpunkt 204 auf der Schleuderscheibe 201 befestigt. Diese winkelverschwenkbaren Wurfschaufeln 203 weisen den Festsetzmechanismus 205 auf, der beispielsweise als lösbare Schraube ausgebildet ist und mit dem sich in der Schleuderscheibe 201 befindlichen Langloch 206 zusammenwirkt Parallel zu dem Langloch 206 ist die Aussparung 207 in die Schleuderscheibe 201 eingestanzt. In diese Aussparung 207 ist die Einstellskala 208 mit ihren Markierungspunkten 209 von unten in die Schleuderscheibe 201 eingesetzt.

Soll beispielsweise eine ganz bestimmte Düngersorte über einen Streubereich von 16 m verteilt werden, schlägt der Benutzer des Schleuderdüngerstreuers 1 die zu dem Streuer zugehörige Streutabelle auf und ermittelt die Einstelldaten für die winkelverschwenkbaren Wurfschaufeln 203 der als Normalstreuscheibe 201 ausgebildeten Schleuderscheibe für die auszustreuenden Düngermittelsorten bei der gewünschten Streubreite. Werden hierfür nun der Streutabelle beispielsweise die Daten
"5" und "16"
entnommen, werden die Wurfschaufeln 203 der Schleuderscheibe 201 nach Lösen der jeweiligen Festsetzmechanismen 205 derart verschwenkt, bis daß diese entsprechenden Zahlen bzw. Markierungspunkte 209 des Anzeigenfeldes 216 an der als Zeiger 217 ausgebildeten Kante 218 der jeweiligen Wurfschaufel 203 ablesbar sind. Dadurch, daß die Anzeigenfelder 216 der den beiden Wurfschaufeln 203 zugeordneten Skalen 208 unterschiedlich ausgebildet sind, ist eine unverwechselbare Einstellung der winkelverschwenkbaren Nurfschaufeln 203, der als Normalstreuscheibe 201 ausgebildeten Schleuderscheibe, gewährleistet. Streufehler durch unsachgemäße Einstellung der Wurfschaufeln 203 sind somit völlig ausgeschlossen.

Damit die Streuscheiben 201 auch für die sog. Spätdüngung eingesetzt werden können, weisen die Wurfschaufeln 203 jeweils an ihren äußeren Enden als sog. Schwenkschaufeln ausgebildete Teile 219 auf, welche um die Schwenkachse 220 in aufrechter Ebene schwenkbar sind. Dieses Teil 219 läßt sich in zwei verschiedene Positionen arretieren, so daß sich die Flugkurve der von den Wurfschaufeln 203 abgeschleuderten Düngemittelpartikel verändern läßt, so daß sich Pflanzen in unterschiedlichen Wachstumsstadien düngen lassen.

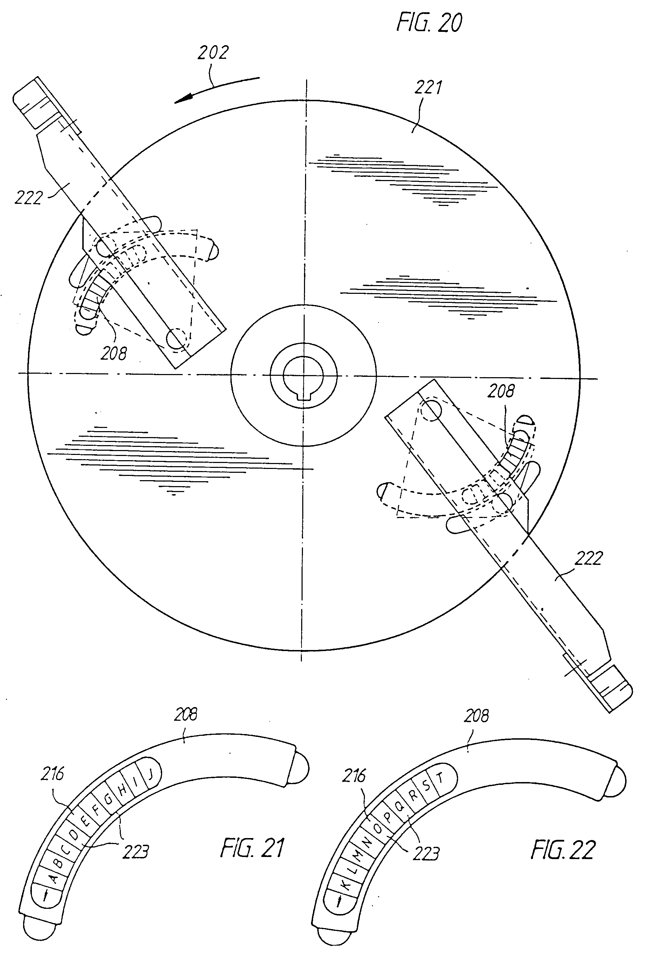

Bei der Schleuderscheibe 221 gemäß Fig. 20 handelt es sich um die rechte Schleuderscheibe des Schleuderdüngerstreuers 1, die für das sog. "Breitstreuen" ausgebildet ist. Diese Schleuderscheibe 221 unterscheidet sich nur durch die längeren Wurfschaufeln 222, die die Düngemittel über einen weiteren Streubereich abschleudern, von der Normalstreuscheibe 201 gemäß Fig. 17.

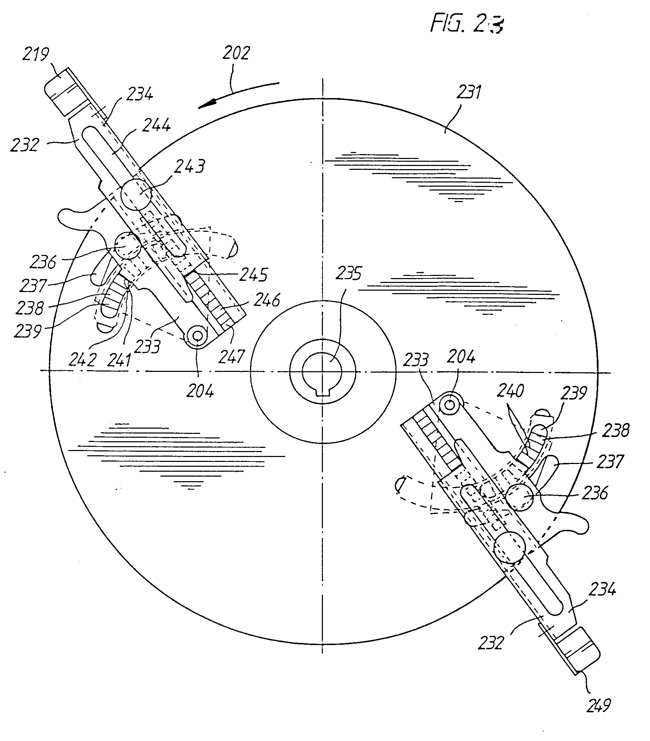

Bei der Schleuderscheibe 231 gemäß Fig. 23 handelt es sich um eine Schleuderscheibe die sich gleichzeitig für das sog. "Normal- und Breitstreuen" einsetzen läßt. Diese Schleuderscheibe 231 weist die Wurfschaufeln 232 auf. Die jeweiligen Wurfschaufeln 232 bestehen aus den zwei teleskopartig in Längsrichtung der Wurfschaufeln 232 zueinander verschiebbaren und in verschiedenen Längen der Wurfschaufeln 232 festsetzbaren Teile 233 und 234. Diese Wurfschaufeln 232 sind derart ausgebildet, daß der innere Teil 233 der Wurfschaufel 232 in radialer Richtung unverschiebbar ist. Diese längenveränderbaren Wurfschaufeln 232 sind jeweils winkelverschwenkbar auf der Schleuderscheibe 231 angeordnet.

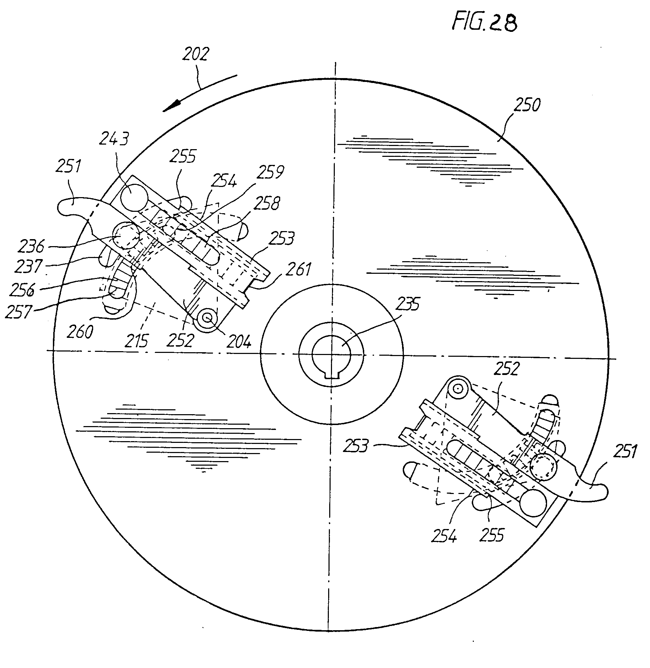

Die Schleuderscheibe 250 gemäß Fig. 28 ist mit zwei teleskopartigen in Längsrichtung der Wurfschaufeln 251 zueinander verschiebbaren und bei verschiedenen Längen der Wurfschaufeln 251 festsetzbaren Teilen 252 und 253 ausgerüstet. Die Wurfschaufeln 251 sind ebenfalls winkelverschwenkbar auf der Schleuderscheibe 250, die als Grenzstreuscheibe ausgebildet ist, angeordnet. Bei diesen teleskopartig ausgebildeten Wurfschaufeln 251 für das Grenzstreuen handelt es sich im wesentlichen um kürze Wurfschaufeln 251, als bei den Wurfschaufeln der Schleuderscheibe 231 gemäß Fig. 23. Diese Grenzstreuwurfschaufeln 251 unterscheiden sich nur in der Ausbildung des verschiebbaren äußeren Teiles 253, daß bei diesen sog. Grenzstreuwurfschaufeln 251 wesentlich kürzer ist, als das äußere Teil 234 der in der vorhergehenden Fig. 23 beschriebenen Wurfschaufeln 232. Das innere Teil 252 der Grenzstreuwurfschaufeln 251 unterscheidet sich nur hinsichtlich eines verkürzten Rückenteiles 254 von dem inneren Teil 233 der Wurfschaufel 232 der Schleuderscheibe 231 gemäß Fig. 23. Dieses Verkürzen des Rückenteiles 254 wird erforderlich, um den Abstand der Abstreukante 255 von der Rotationsachse 235 der Schleuderscheibe 250 bei den Grenzstreuwurfschaufeln 251 wesentlich zu verringern. Dieses ist erforderlich, um die Arbeitsbreite der mit diesen Grenzstreuwurfschaufeln 251 versehenen Schleuderscheiben 250 wesentlich zu verringern um ein am Feldrand steil abfallendes Streubild zu erhalten. Die jeweilige Einstellung dieser winkelverschwenkbaren Grenzstreuwurfschaufeln 251 hinsichtlich ihrer Länge und ihres Anstellwinkels erfolgt in bereits erwähnter Weise nach den entsprechenden Angaben einer Streutabelle. Bei dieser als Grenzstreuscheibe ausgebildeten Schleuderscheibe 250 sind die Einstellskalen für die Einstellung der Winkelverschwenkbarkeit und der Länge jeweils gleich ausgebildet. Die Einstellskala 256 einer jeden Wurfschaufel 251 weist die gleichen Markierungselemente 257 für die Einstellung der Winkelverschwenkbarkeit auf. Die jeweiligen Einstellskalen 258 für die Längenveränderung der Wurfschaufeln 251 weisen ebenfalls die gleichen Markierungselemente 259 für die beiden, auf der Schleuderscheibe 250 jeweils angeordneten Wurfschaufeln 251 auf. Die Kante 260 des inneren Teiles 252 der Wurfschaufel 250 wirkt mit der Einstellskala 256 für die Winkelverschwenkbarkeit zusammen, während die Kante 261 des äußeren Teiles 253 der Wurfschaufel 250 mit der Einstellskala 258 für die Längenveränderung zusammenwirkt.

## Patentansprüche

1. Schleuderdüngerstreuer zum Verteilen von Düngemitteln und dgl. mit einem Vorratsbehälter, der Dosierelemente für zumindest zwei, vorzugsweise quer zur Fahrtrichtung angeordneten Schleuderscheiben aufweist und jede Schleuderscheibe mit zumindest zwei Wurfschaufeln ausgestattet ist, wobei die Wurfschaufeln in Scheibenebene verschwenkbar und in verschiedene Positionen festsetzbar auf der Schleuderscheibe angeordnet sind, und wobei die Abstände der Abstreukanten der Wurfschaufeln zur Drehachse der Schleuderscheibe wesentlich unterschiedlich sind, wobei auf den Schleuderscheiben (10, 121, 126, 127, 201, 221, 224, 231, 250) eine Anzahl von Arretierungs- und/oder Einstellmarkierungen (20, 34, 203, 222, 225, 232, 251) für die Wurfschaufeln (11, 21, 111, 112, 122, 123, 128, 209, 223, 230, 240, 257) vorgesehen sind, wobei die Schleuderscheiben (10, 121, 126, 127, 201, 221, 224, 231, 250) auswechselbar auf ihren Antriebswellen angeordnet und gegen Schleuderscheiben (10, 121, 126, 127, 201, 221, 224, 231, 250) mit anders ausgebildeten und/oder angestellten Wurfschaufeln austauschbar sind, **dadurch gekennzeichnet**, daß Grenzstreuscheiben vorhanden sind, die Wurfschaufeln (42) aufweisen, die teleskopartig längenveränderbar sowie in horizontaler Ebene winkelverschwenkbar auf den Grenzstreuschieben (10) angeordnet sind, welche im Außenbereich ein steil abfallendes Streubild erzeugen, und die zum Grenzstreuen gegen die Schleuderscheiben (10, 121, 126, 127, 201, 221, 224, 231, 250) austauschbar sind.

2. Schleuderdüngerstreuer nach Anspruch 1, dadurch gekennzeichnet, daß für jede Wurfschaufel (11,42,111,112,122,123,128,209,223,230,240,257) eigene Arretierungs- und/oder Einstellmarkierungen (20,34,203,222,225,232,251) vorgesehen sind.

3. Schleuderstreuer nach einem oder mehrerer der vorstehenden Ansprüche, dadurch gekennzeichnet, daß die Symbole für die Markierungen (20,34,203,222,225,232,251) der Wurfschaufeln (11,42,111,112,122,123,128,209,223,230,240,257) jeder Schleuderscheibe (10,121,126,127,201,221,224,231,250) zumindest für die längste und die kürzeste unterschiedlich und unverwechselbar sind.

4. Schleuderdüngerstreuer nach Anspruch, dadurch gekennzeichnet, daß verschiedenartige Schleuderscheiben (201,221,224,231,250) und/oder Wurfelemente (203,222,225,232,251) in auswechselbarer Weise vorgesehen sind, daß Grenzstreuscheiben (224,250) und Schleuderscheiben (201,221) für das "Normal-" und "Breitstreuen" vorgesehen sind, daß für die als Grenzstreuscheibe (224,250) eingesetzte Schleuderscheibe gleiche Markierungen (230,257) und Bezeichnungen für die Einstellskalen (229,256) aller Wurfschaufeln (225,251) vorgesehen sind, und daß für die zum "Normal-" und "Breitstreuen" vorgesehenen Schleuderscheiben (201,221) für jede Wurfschaufel (203,222) verschiedene, "unverwechselbare" Markierungen (209,223) und Bezeichnungen für die Einstellskalen (208) vorgesehen sind.

## Claims

1. Centrifugal fertiliser broadcaster for distributing fertilisers and the like, including a hopper, which has metering members for at least two centrifugal discs preferably disposed transversely relative to the direction of travel, and each centrifugal disc is provided with at least two throwing vanes, the throwing vanes being disposed on the centrifugal disc so as to be pivotable in the disc plane and securable in different positions, and the spacings between the dispersing edges of the throwing vanes and the axis of rotation of the centrifugal disc being substantially variable, a number of locking and/or adjusting markings (20, 34, 203, 222, 225, 232, 251) for the throwing vanes (11, 21, 111, 112, 122, 123, 128, 209, 223, 230, 240, 257) being provided on the centrifugal discs (10, 121, 126, 127, 201, 221, 224, 231, 250), the centrifugal discs (10, 121, 126, 127, 201, 221, 224, 231, 250) being interchangeably disposed on their drive shafts and being exchangeable for centrifugal discs (10, 121, 126, 127, 201, 221, 224, 231, 250) having differently configured and/or orientated throwing vanes, characterised in that limited broadcasting discs are provided, which have throwing vanes (42) disposed on the limited broadcasting discs (10) so as to be telescopically variable in respect of length and angularly pivotable in the horizontal plane, which limited broadcasting discs produce a steeply descending broadcasting pattern in the external region and are exchangeable for the centrifugal discs (10, 121, 126, 127, 201, 221, 224, 231, 250) for the limited broadcasting operation.

2. Centrifugal fertiliser broadcaster according to claim 1, characterised in that each throwing vane (11, 42, 111, 112, 122, 123, 128, 209, 223, 230, 240, 257) is provided with its own locking and/or adjusting markings (20, 34, 203, 222, 225, 232, 251).

3. Centrifugal fertiliser broadcaster according to one or more of the preceding claims, characterised in that the symbols for the markings (20, 34, 203, 222, 225, 232, 251) of the throwing vanes (11, 42, 111, 112, 122, 123, 128, 209, 223, 230, 240, 257) of each centrifugal disc (10, 121, 126, 127, 201, 221, 224, 231, 250) are variable and non-confusible, at least for the longest and the shortest.

4. Centrifugal fertiliser broadcaster according to claim 1, characterised in that different types of centrifugal discs (201, 221, 224, 231, 250) and/or throwing elements (203, 222, 225, 232, 251) are provided in an interchangeable manner, in that limited broadcasting discs (224, 250) and centrifugal discs (201, 221) are provided for the "normal dispersing" and "wide dispersing" operations, in that the same markings (230, 257) and designations for the graduated scales (229, 256) of all of the throwing vanes (225, 251) are provided for the centrifugal disc used as the limited broadcasting disc (224, 250), and in that "non-confusible" markings (209, 223) and designations for the graduated scales (208), which markings and designations are different for each throwing vane (203, 222), are provided for the centrifugal discs (201, 221) intended for the "normal dispersing" and "wide dispersing" operations.

## Revendications

1. Epandeur centrifuge d'engrais pour distribuer des engrais ou produits analogues, comportant un réservoir d'alimentation équipé d'éléments de dosage pour au moins deux disques d'épandage disposés de préférence transversalement à la direction de déplacement, chaque disque étant équipé d'au moins deux palettes d'éjection, ces palettes d'éjection pouvant pivoter dans le plan du disque et se bloquer dans différentes positions sur le disque d'épandage, les disques d'épandage (10, 121, 126, 127, 201, 221, 224, 231, 250) comportant un certain nombre de repères de blocage et/ou de réglage (20, 34, 203, 222, 225, 232, 251) pour les palettes d'éjection (11, 21, 111, 112, 122, 123, 128, 209, 223, 230, 240, 257), les disques d'épandage (10, 121, 126, 127, 201, 221, 224, 231, 250) étant montés de manière échangeable sur leur axe d'entraînement pour être remplacés par des disques d'épandage (10, 121, 126, 127, 201, 221, 224, 231, 250), de formes différentes et/ou avec des palettes d'éjection disposées différemment,
caractérisé par
des disques d'épandage en limite qui comportent des palettes d'éjection (42) réglables en longueur de manière télescopique et pivotant angulairement dans un plan horizontal sur les disques d'épandage en limite (10), qui génèrent dans la zone extérieure une image d'épandage chutant rapidement, et ces disques peuvent remplacer les disques d'épandage (10, 121, 126, 127, 201, 221, 224, 231, 250) pour l'épandage en limite.

2. Epandeur centrifuge d'engrais selon la revendication 1,
caractérisé en ce que
pour chaque palette d'éjection (11, 42, 111, 112, 122, 123, 128, 209, 223, 230, 240, 257), il y a des repères de réglage et/ou de blocage distincts (20, 34, 203, 222, 225, 232, 251).

3. Epandeur centrifuge selon l'une quelconque des revendications précédentes,
caractérisé en ce que
les symboles des repères (20, 34, 203, 222, 225, 232, 251) des palettes d'éjection (11, 42, 111, 112, 122, 123, 128, 209, 223, 230, 240, 257) de chaque disque d'épandage (10, 121, 126, 127, 201, 221, 224, 231, 250) sont différents au moins pour le plus grand et le plus court et sont non interchangeables.

4. Epandeur centrifuge d'engrais selon la revendication 1,
caractérisé par
différents disques d'épandage (201, 221, 224, 231, 250) et/ou d'éléments d'éjection (203, 222, 225, 232, 251),
- des disques d'épandage en limite (224, 250) et des disques d'épandage (201, 221) pour l'épandage « normal » et « l'épandage en largeur »,
- pour les disques utilisés pour l'épandage en limite (224, 250) il y a les mêmes repères (230, 257) et les mêmes dénominations des indexes de réglage (229, 256) pour toutes les palettes d'éjection (225, 251),
- et pour les disques d'épandage (201, 221) prévus pour l'épandage « normal » et « l'épandage large », il y a pour chaque palette d'éjection (203, 222), des repères (209, 223) non interchangeables et des indexes pour les échelles de réglage (208).
